# EUROPEAN PATENT APPLICATION

(11) **EP 1 455 403 A2**
(43) Date of publication of application: **08.09.2004**
(21) Application number: 04004862.1
(22) Date of filing: 02.03.2004
(51) Int. Cl.: H01M 8/00

(54) **Electronic apparatus, and state display control method**

(30) Priority: 04.03.2003 JP 2003057466
(71) Applicant: Kabushiki Kaisha Toshiba, Tokyo (JP)
(72) Inventor: Ninomiya, Ryoji, Minato-ku Tokyo 105-8001 (JP); Ishigaki, Satoru, Minato-ku Tokyo 105-8001 (JP)
(74) Representative: Henkel, Feiler & Hänzel

(57) **Abstract**

An electronic apparatus (1) operates on power supplied from a fuel cell unit (2) that generates electric power using methanol as fuel. The power supply management utility executed by the CPU (11) acquires status information on the fuel cell unit (2) stored in the register (161) of a power supply controller (16) by way of BIOS. On the basis of the status information acquired, the power supply management utility displays messages peculiar to the fuel cell unit (2) with good timing. The messages include a message to prompt the user to install a detachable cartridge fuel tank in the fuel cell unit (2) and a message to prompt the user to replace the fuel tank.

## Description

This invention relates to a system management technology for electronic apparatuses using a battery composed of a fuel cell that generates electric power using methanol as fuel.

In recent years, various types of battery-powered portable electronic apparatuses, such as portable information terminals called personal digital assistants (PDAs) or digital cameras, have been developed and widely used.

In addition, environmental problems have lately attracted considerable attention, and environment-friendly batteries are now being actively developed. One well-known battery of this type is a direct methanol fuel cell (hereinafter, referred to as DMFC).

In the DMFC, methanol supplied as fuel reacts with oxygen, thereby producing electric energy. The DMFC has such a structure wherein an electrolyte is sandwiched between two electrodes composed of porous metal or carbon (e.g., see Hironosuke Ikeda "All about Fuel Cells," Nihonjitsugyo Publishing Co., Ltd, August 20, 2001, pp. 216-217). Since DMFCs do not generate toxic substances, there is a strong demand that they be used in the above-mentioned electronic apparatus.

When the remaining amount of charge in the battery has dropped, a notebook personal computer provided with a conventional battery, such as a lithium ion battery, generally displays a message to inform the user of the low battery state, thereby prompting the user to charge the battery. Moreover, depending on the situation, the system power supply may be turned off automatically after the present working environment is saved into a nonvolatile memory device.

On the other hand, in the case where the DMFC is installed, when the remaining amount of fuel has dropped, it is necessary to display a message to prompt the user to replace the cartridge that holds methanol in place of a message to prompt the user to charge the battery. In addition, when the cartridge has been removed, it is necessary to display a message to prompt the user to install a cartridge.

Furthermore, when an error peculiar to the DMFC has occurred, it is necessary not only to display information on the error but also to carry out a suitable process when necessary.

It is, accordingly, an object of the present invention to provide an electronic apparatus and a state display control which realize a message display peculiar to a fuel cell.

The foregoing object is accomplished by providing an electronic apparatus characterized by comprising a body, a display unit provided on the body, a fuel cell unit having a fuel cell capable of supplying electric power to the body and a tank for the fuel cell, a sensing unit which senses the remaining amount of fuel in the tank, and a control unit which causes the display unit to display a remaining amount of fuel sensed by the sensing unit.

With the present invention, a message display peculiar to a fuel cell is made suitably.

That is, with the present invention, it is possible to provide an electronic apparatus and a state display control which realize a message display peculiar to a fuel cell.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an outward appearance of an electronic apparatus system according to an embodiment of the present invention;
FIG. 2 shows an outward appearance of the electronic apparatus system, with the top cover of the electronic apparatus of FIG. 1 opened;
FIG. 3 shows a schematic configuration of the electronic apparatus in the embodiment;
FIG. 4 shows a schematic configuration of a fuel cell unit in the embodiment;
FIG. 5 shows an example of a message to prompt the user to install a fuel tank displayed by the power supply management utility operating in the electronic apparatus system of the embodiment;
FIG. 6 shows an example of a message to prompt the user to replace the fuel tank displayed by the power supply management utility operating in the electronic apparatus system of the embodiment;
FIG. 7 shows an example of a message to notify shutdown displayed by the power supply management utility operating in the electronic apparatus system according to the embodiment;
FIG. 8 shows an example of a message to notify the occurrence of an abnormality displayed by the power supply management utility operating in the electronic apparatus system of the embodiment; and
FIG. 9 is a flowchart for the procedure for message display control executed in the electronic apparatus system of the embodiment.

Hereinafter, referring to the accompanying drawings, an embodiment of the present invention will be explained.

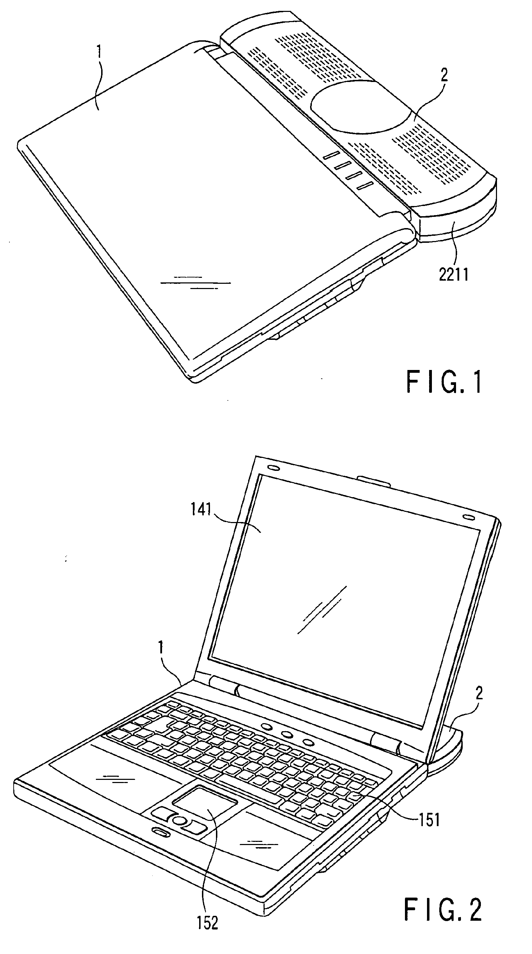

FIG. 1 shows an outward appearance of an electronic apparatus system according to an embodiment of the present invention.

As shown in FIG. 1, the electronic apparatus system comprises an electronic apparatus 1, such as a notebook personal computer, and a fuel cell unit 2 which can be installed on and removed from the back of the electronic apparatus 1. The fuel cell unit 2, which is a power supply unit for supplying power to operate the electronic apparatus 1, includes a DMFC that causes methanol supplied as fuel to react with oxygen to produce electrical energy. Methanol, as fuel for the DMFC, is supplied from a cartridge fuel tank 2211 detachably housed in the fuel cell unit 2.

FIG. 2 shows an outward appearance of the electronic apparatus system, with the top cover of the electronic apparatus opened.

As shown in FIG. 2, the top cover of the electronic apparatus 1 is provided on the body part by a hinge mechanism in such a manner that it can be opened and closed freely. On its inner wall surface, a liquid crystal display (LCD) 141 is provided. In the body part, there are provided a keyboard 151 for entering characters, symbols, and the like into the display screen appearing on the LCD 141 and a pointing device 152 for moving a mouse cursor displayed to point at a given place on the LCD 141 and pointing out a selection.

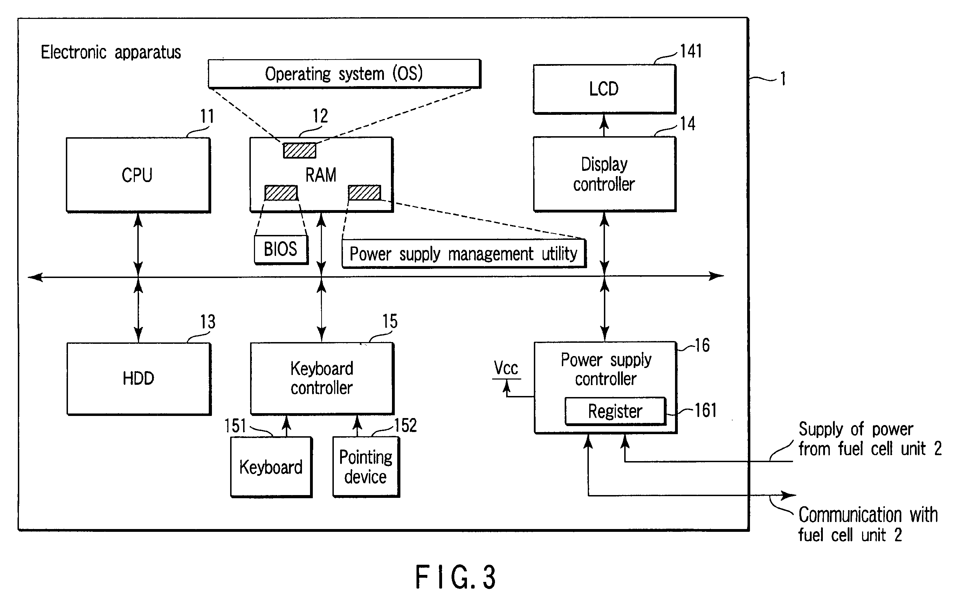

FIG. 3 shows a schematic configuration of the electronic apparatus 1.

As shown in FIG. 3, in the electronic apparatus 1, a CPU 11, a RAM 12, an HDD 13, a display controller 14, a keyboard controller 15, and a power supply controller 16 are connected to a system bus.

The CPU 11, which supervises control of the operation of the entire electronic apparatus 1, executes various types of programs, including an operating system, basic input/output system (BIOS), utility software, and application software stored in the RAM 12. A power supply management utility explained later is one of a plurality of utility software programs.

The RAM 12, which is a storage medium acting as a main memory for the CPU 11, stores various programs executed by the CPU 11 and various types of data used in those programs. The HDD 13, which is a storage medium acting as an auxiliary memory for the electronic apparatus 1, stores various programs and various types of data in large amounts.

The display controller 14, which is a device that handles the output side of a user interface provided by the electronic apparatus 1, performs control of the screen data processed by the CPU 11 so as to display the data on the LCD 141. The keyboard controller 15, which is a device that handles the input side of the user interface provided by the electronic apparatus 1, digitizes the operation of the keyboard 151 or pointing device 152 and transmits the result via an internal register to the CPU 11.

The power supply controller 16, which supplies operating power to each section of the electronic apparatus 1, has the function of not only receiving power from the fuel cell unit 2 but also communicating with a microcomputer 21 (described later) of the fuel cell unit 2. In addition, the power supply controller 16 includes a register 161 for storing status information representing the state of the fuel cell unit 2. Referring to the status information, the power supply management utility can know the state of the fuel cell unit 2. As described later, the power supply management utility of the electronic apparatus system suitably displays a message peculiar to the DMFC.

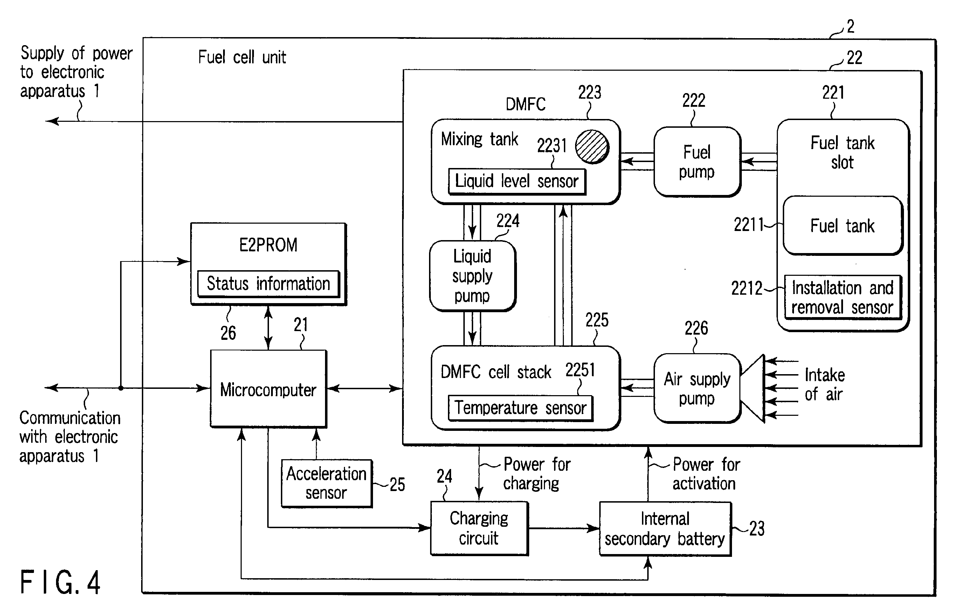

FIG. 4 shows a schematic configuration of the fuel cell unit 2.

As shown in FIG. 4, the fuel cell unit 2 has a microcomputer 21, a DMFC 22, an internal secondary cell 23, a charging circuit 24, an acceleration sensor 25, and an E2PROM 26.

The microcomputer 21, which supervises control of the operation of the entire fuel cell unit 2, communicates with the power supply controller 16 of the electronic apparatus 1.

Furthermore, the microcomputer 21, which also functions as a power supply controller in the fuel cell unit 21, performs control so as to supply the power of the internal secondary cell 23 to the DMFC 22 at the activation of the DMFC 22. When the DMFC 22 can supply power and the internal secondary cell 23 is in the low battery state, the microcomputer 21 performs control so as to charge the internal secondary cell 23 with the power of the DMFC 22.

The DMFC 22 is composed of a fuel tank slot 221, a fuel pump 222, a mixing tank 223, a liquid supply pump 224, a DMFC cell stack 225, and an air supply pump 226.

The fuel tank slot 221, which is a slot for housing a cartridge fuel tank 2211 in such a manner that the tank 2211 can be installed and removed freely, has an installation and removal sensor 2212 for detecting the presence or absence of the installation of the fuel cell tank 2211. Methanol in the fuel cell tank 2211 housed in the fuel cell tank slot 221 is fed to the mixing tank 223. The methanol is diluted to, for example, 10% concentration by the water fed back from the DMFC cell stack 225.

The mixing tank 223, which holds the dilute methanol, has a liquid level sensor 2231 for sensing whether or not the amount of the liquid falls in a suitable amount range. It is assumed that 15 to 90% of the holding capacity of the mixing tank 223 is within the suitable amount range. When the liquid level sensor 2231 has sensed that the amount of the liquid in the mixing tank 223 has gone outside the range for two seconds or longer continuously, the microcomputer 21 determines that some abnormality has occurred. In addition, the mixing tank 223 has the function of vaporizing the unnecessary part of the water returned from the DMFC cell stack 225, thereby discharging the unnecessary water outside the DMFC 22.

The liquid supply pump 224 feeds the methanol in the mixing tank 223 to the DMFC cell stack 225. To the DMFC cell stack 225, the air taken in by the air supply pump 226 is fed. Then, the methanol fed by the liquid supply pump 224 reacts with oxygen in the air fed by the air supply pump 226 in the DMFC cell stack 225, thereby generating power supplied to the electronic apparatus 1. At this time, water is also produced. This water is returned to the mixing tank 223 through a return flow path.

The DMFC cell stack 225 has a temperature sensor 2251 for sensing whether or not the temperature in the stack falls in a suitable temperature range. It is assumed that the suitable temperature in the DMFC cell stack 225 at the activation of the DMFC 22 is 5 to 40°C and the suitable temperature in the DMFC cell stack 225 during the operation of the DMFC 22 is 50 to 90°C. At the start-up of the DMFC 22 and during its operation, the microcomputer 21 monitors whether or not the temperature in the stack falls in the respective suitable temperature ranges.

The internal secondary cell 23, which is a lithium ion cell that can be charged and discharged repeatedly, supplies power needed by an auxiliary mechanism, including the fuel pump 222, liquid supply pump 224, and air supply pump 225, during the time from when the DMFC 22 starts to operate until more than a specific amount of power is generated. In addition, the internal secondary cell 23 may be charged by the charging circuit 24 under the control of the microcomputer 21 by using the power generated by the DMFC 22.

The acceleration sensor 25 is a sensor for sensing whether or not the inclination of the fuel cell unit 2 is in a permitted angle range. It is assumed that the permitted range is an inclination of 30 degrees or less. If this range has been exceeded, the microcomputer 21 determines that a warning to the user is necessary.

The E2PROM 26 is a memory device for storing status information indicating the state of the fuel cell unit 2. The microcomputer 21 records various states detected by various sensors, including the installation and removal sensor 2212, liquid level sensor 2231, temperature sensor 2251, and acceleration sensor 25, into the E2PROM 26 in the form of status information. In addition, the microcomputer 21 has the function of computing the remaining amount of fuel in the fuel tank 2211 according to the operating state of the DMFC 22. The microcomputer 21 also records the computed remaining amount into the E2PROM 26. Furthermore, the microcomputer 21 monitors whether or not the auxiliary mechanism, including the fuel pump 222, liquid supply pump 224, and air supply pump 226, is operating properly. For example, if the auxiliary mechanism has stopped abnormally, the microcomputer 21 records this as status information.

For the power supply controller 16 on the electronic apparatus 1 side to be able to refer to the area of the E2PROM 26 in which the status information is stored, the interface for the area is opened. The power supply controller 16 reads the status information from the E2PROM 26 and stores it into the built-in register 161.

In the electronic apparatus system of the embodiment having the aforementioned configuration, the power supply management utility, which operates under the control of the operating system, instructs the power supply controller 16 by way of the BIOS to read the status information stored in the E2PROM 26 at regular intervals of time. Then, the latest status information is stored in the register 161 of the power supply controller 16. As soon as the power supply management utility receives a reading end notice from the power supply controller 16, it acquires the status information in the register 161 by way of the BIOS.

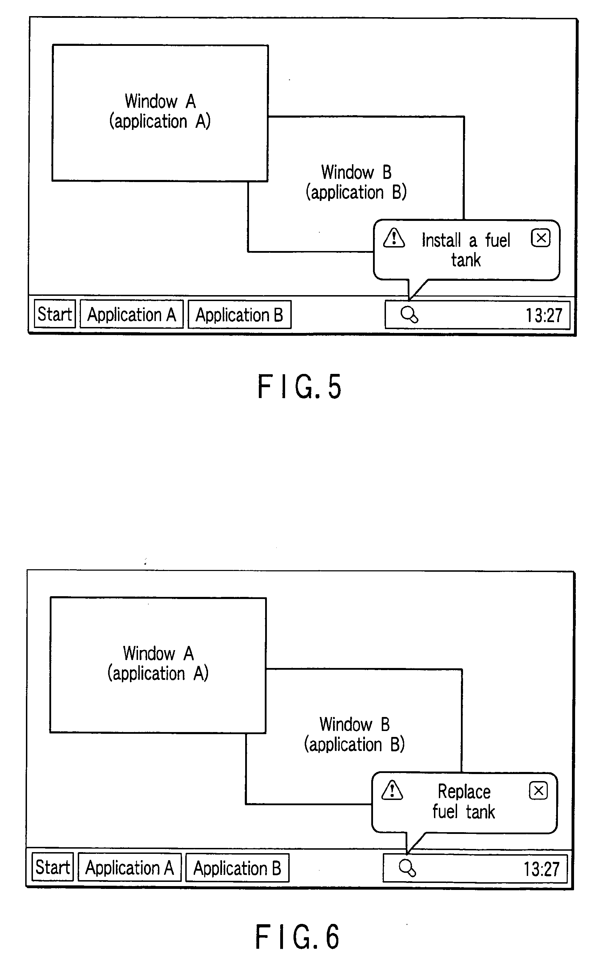

Referring to the status information, the power supply management utility can determine whether or not the fuel tank 2211 has been installed. If the fuel tank 2211 has not been installed, the power supply management utility displays a message to prompt the user to install the fuel tank 2211. FIG. 5 shows an example of a message given by the power supply management utility.

In the example, two application software programs A and B are running and windows A and B for the two programs have been secured on the screen. In the lower part of the screen, an area called a task bar is secured. In the task bar, buttons which enable the application software programs A and B to be called easily by click operations are displayed.

Furthermore, at the right end of the task bar, an area called a task tray is secured. In the task tray, for example, icons for indicating the state of resident programs running in the background are displayed. Therefore, this area is also called an indicator area. In the electronic apparatus 1, the icon for the power supply management utility is displayed in the task tray.

The power supply management utility whose icon is displayed in the task tray requests the operating system to display the message "Install the fuel tank" in text-balloon form. Receiving the request, the operating system displays the message on the icon for the power supply management utility in the form as shown in FIG. 5. This realizes the display of a fuel tank installation request in the form of a message peculiar to the fuel cell unit 2.

At the time when the fuel time 2211 is removed, a sufficient amount of dilute methanol is left in the mixing tank 223 of the DMFC 22. Therefore, for the time being, it is possible to continue supplying power to the electronic apparatus 1. In the electronic apparatus system, if its operation is continued in the present state, to display a message with good timing to indicate that the fuel has decreased to zero, the remaining amount of fuel in the fuel tank 2211 stored in the E2PROM 26 is forced to be updated to a previously specified proper value, when the microcomputer 21 of the fuel cell unit 2 has found from the installation and removal sensor 2212 that the fuel tank 2211 has been removed. This value can be calculated from the standard amount of liquid and the dilution of methanol in the mixing tank 223 during the operation of the DMFC 22 and the holding capacity of the fuel tank 2211.

Furthermore, from the status information, the power supply management utility can determine the remaining amount of fuel in the fuel tank 22. If the remaining amount of fuel in the fuel tank 2211 has decreased below a specific amount, the power supply management utility displays a massage to prompt the user to replace the fuel tank 2211 as shown in FIG. 6.

It is desirable that the specific amount serving as the decision criterion should be set a value equal to or less than 10% of the holding capacity of the fuel cell 2211. This value, however, may be set arbitrarily by the power supply management utility. To do the setting, the user clicks the icon for the power supply management utility displayed in the task tray with the pointing device 152. Then, being clicked, the power supply management utility displays an interface screen for various settings. On the interface screen, the user sets the specific amount serving as the decision criterion.

With this setting, it is possible to display a request for replacement of the fuel tank in the form of a message peculiar to the fuel cell unit 2.

Next, explanation will be given about displaying messages when the occurrence of the following abnormal cases is detected from the status information: a case where the amount of liquid in the mixing tank 223 has fallen outside a suitable amount, a case where the temperature in the DMFC cell stack 225 has fallen outside a suitable range, a case where the fuel pump 222, liquid supply pump 224, or air supply pump 225 has stopped, and a case where the fuel has decreased to zero.

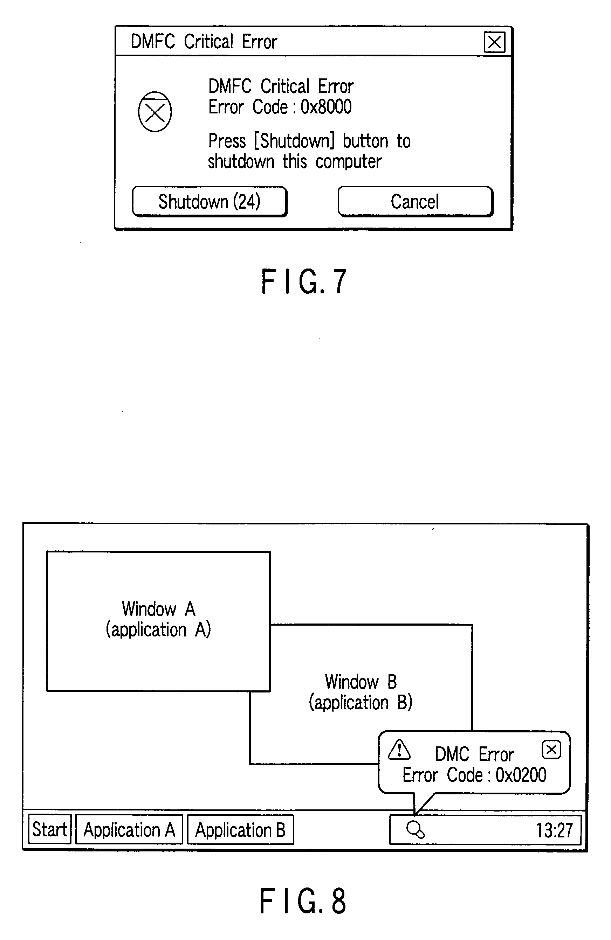

When the occurrence of such an abnormality is detected, the power supply management utility requests the operating system to carry out, for example, a shutdown process, depending on the degree of importance. If such a serious abnormality as needs the execution of the shutdown process has occurred, the power supply management utility requests the operating system to makes a window display of a message as shown in FIG. 7 having a greater warning effect on the user, not a text-balloon display as shown in FIGS. 5 and 6.

The message shown in FIG. 7 informs the user that the system is shut down. When the "Shutdown" button is clicked, the power supply management utility requests the operating system to execute the shutdown process immediately. Even when the "Shutdown" button is not clicked, if any operation is not carried out for a specific time (that is, the "Cancel" button is not clicked), the power supply management utility automatically requests the operating system to execute the shutdown process.

On the other hand, when an abnormality so light that the execution of the shutdown process is not needed, such as the falling of the inclination of the fuel cell unit 2 outside the permitted range, has occurred, the power supply management utility displays an error code representing its contents together with a message to warn of the occurrence of an abnormality, as shown in FIG. 8. Then, when any other process is needed in place of the shutdown process, the power supply management utility requests the operating system to execute the process.

As described above, when an abnormality has occurred in the fuel cell unit 2, the electronic apparatus system displays a message about the occurrence of an abnormality and automatically executes a process to cope with the abnormality.

The operating system, which supervises the resource management of the personal computer, also can manage the remaining power of the battery. Generally, in the power supply controller 16, the state where the battery remaining power has decreased to the level that cannot assure the operation from a hardware viewpoint is defined as battery remaining power 0%. When the operating system recognizes battery remaining power 0%, it executes the shutdown process.

Furthermore, in the electronic apparatus system, the power supply management utility acquires the remaining amount of fuel in the fuel cell unit 2 from the power supply controller 16 and informs the operating system of the remaining amount. Therefore, in a case where the fuel has decreased to zero, the power supply management utility requests the operating system to carry out the shutdown process, when receiving notice that the fuel cell unit 2 has dropped to the battery remaining power 0%.

However, when the DMFC22 is used as a power supply, a message to prompt shutdown with the trigger of the battery remaining power 0% defined at the power supply controller 16 is displayed and a shutdown process is actually carried out, with the result that there is a strong possibility that they cannot be ended properly. Thus, it cannot be said that the message to prompt shutdown was displayed with good timing. Thus, in the electronic apparatus system, to display the message to prompt shutdown with good timing, the power supply management utility informs the operating system of a value smaller than the actual value by adding, for example, a 2% offset to the actual one, instead of informing the operating system of the remaining amount of fuel in the fuel tank 2211 shown in the status information acquired from the power supply controller 16.

It is assumed that the remaining amount of fuel in the mixing tank has been stored in the E2PROM 26 of the fuel cell unit 2 in the value measured by the liquid level sensor 2231. The microcomputer 21 informs the power supply controller 16 of the electronic apparatus 1 of the value obtained by subtracting 2% from the value stored in the E2PROM 26. The power supply controller 16 informs the CPU 11 of an interrupt and the remaining amount of fuel. As a result, the operating system is informed of the remaining amount smaller than the actual amount. Therefore, even when the operating system recognizes 0%, the 2% remaining amount is left in the mixing tank 223. With the 2% remaining amount, the shutdown process of the electronic apparatus 1 can be carried out. While the power supply controller 16 has notified the remaining amount, the operating system may read information about the remaining amount periodically.

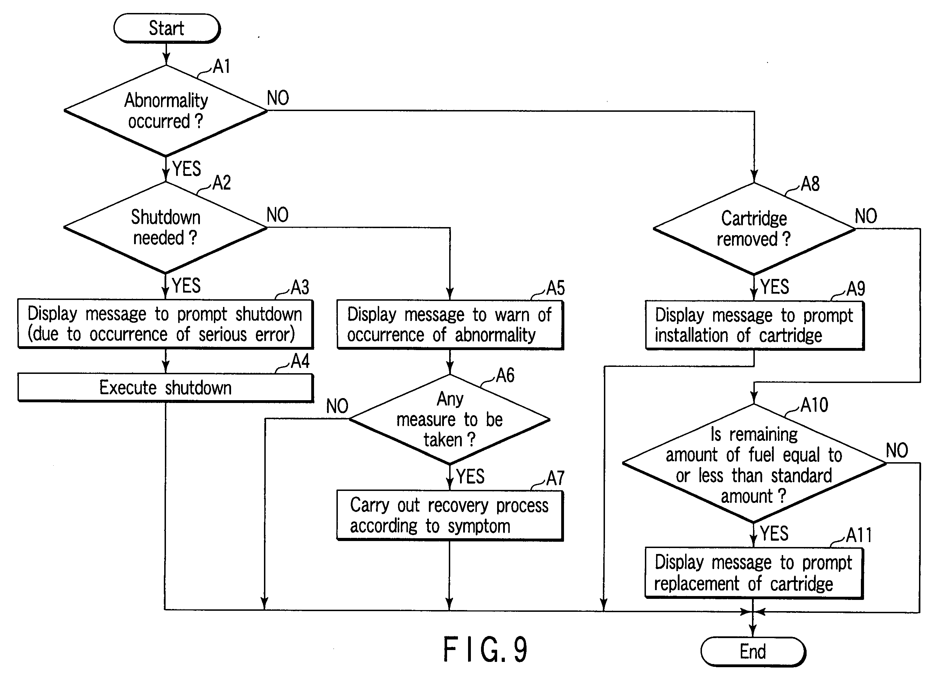

FIG. 9 is a flowchart for the procedure for message display control executed at the electronic apparatus system.

The power supply management utility acquires the status information stored in the E2PROM 26 of the fuel cell unit 2 periodically by way of the power supply controller 16 and checks whether or not an abnormality has occurred in the fuel cell unit 2 (step A1). If an abnormality has occurred (YES in step A1), the power supply management utility determines whether or not the abnormality is of such a high degree of importance that a shutdown process is needed (step A2). If a shutdown process is needed (YES in step A2), the power supply management utility displays a message to prompt a shutdown process (step A3) and then requests the operating system to execute a shutdown process (step A4).

If a shutdown process is not needed (NO in step A2), the power supply management utility displays a message to warn of the occurrence of an abnormality (step A5). If any measure has to be taken (YES in step A6), the power supply management utility requests the operating system to execute the process (step A7).

On the other hand, if no abnormality has occurred (NO in step A1), the power supply management utility determines whether or not the cartridge fuel tank 2211 has been removed (step A8). If it has been removed (YES in step A8), the power supply management utility displays a message to prompt the user to install the fuel tank 2211 (step A9). If it has not been removed (NO in step A8), the power supply management utility then determines whether or not the remaining amount of fuel has dropped below a specific amount (step A10). If it has dropped below the specific amount (YES in step A10), the power supply management utility displays a message to prompt the user to replace the fuel tank 2211 (step A11).

As described above, with the electronic apparatus system, when a message peculiar to the fuel cell unit 2 is displayed properly and an abnormality has occurred, a process corresponding to the abnormality is carried out automatically.

In the embodiment, the power supply management utility running on the electronic apparatus 1 side has acquired periodically the status information stored in the E2PROM 26 of the fuel cell unit 2. Instead, when the microcomputer 21 of the fuel cell unit 2 updates the status information, it may inform the power supply controller 16 of the electronic apparatus 1 of the update. In this case, the power supply controller 16 not only reads the latest status information from the E2PROM 26 and stores it in the built-in register 161 but also informs the CPU 11 of an interrupt and notifies the power supply management utility of the update of the status information. Then, being informed of the update of the status information, the power supply management utility acquires the latest status information stored in the register 161 of the power supply controller 16 by way of the BIOS.

## Claims

1. An electronic apparatus **characterized by** comprising:
a body (1);
a display unit (141) provided on the body;
a fuel cell unit (2) having a fuel cell (22) capable of supplying electric power to the body and a tank for the fuel cell;
a sensing unit (21) which senses a remaining amount of fuel in the tank; and
a control unit (11) which causes the display unit to display the remaining amount of fuel sensed by the sensing unit.

2. The electronic apparatus according to claim 1, **characterized in that** the control unit causes the display unit to display information to prompt a replacement of the tank or information that the remaining amount has decreased below a predetermined value, when the remaining amount of fuel sensed by the sensing unit has decreased below the predetermined value.

3. An electronic apparatus **characterized by** comprising:
a body (1);
a display unit (141) provided on the body;
a fuel cell unit (2) having a fuel cell (22) capable of supplying electric power to the body and an installation portion in which a tank for the fuel cell can be installed;
a sensing unit (2212) which senses whether or not the tank has been installed in the installation portion; and
a control unit (11) which causes the display unit to display information to prompt an installation of the tank or information that the fuel cell has not been installed, when the sensing unit has sensed that the tank has not been installed.

4. An electronic apparatus **characterized by** comprising:
a body (1);
a display unit (141) provided on the body;
a fuel cell unit (2) having a fuel cell (22) capable of supplying electric power to the body and in and from which a tank (2211) for the fuel cell can be installed and removed;
a sensing unit (2231,2251) which senses whether or not an abnormality has occurred in the fuel cell unit; and
a control unit (11) which causes the display unit to display information of the occurrence of an abnormality, when the sensing unit has sensed that an abnormality has occurred in the fuel cell unit.

5. The electronic apparatus according to claim 4, **characterized by** further comprising an abnormality processing unit which carries out a process corresponding to the abnormality.

6. The electronic apparatus according to claim 5, **characterized in that** the control unit causes the display unit to display information that the'body is to be shut down when a predetermined abnormality has occurred in the fuel cell, and
the abnormality processing unit shuts down the body after a predetermined time has elapsed since the display of information by the control unit.

7. The electronic apparatus according to claim 4, **characterized in that** the fuel cell unit includes a storage portion (26) which stores status information indicating at least one of the presence or absence of the installation of the tank, the remaining amount of fuel in the tank, and the presence or absence of the occurrence of an abnormality in the fuel cell unit.

8. The electronic apparatus according to claim 7, **characterized by** further comprising an informing unit which informs the sensing unit of the storage of the status information, when the status information has been stored in the storage portion, wherein
the sensing unit reads the status information stored in the storage portion, when being informed by the informing unit.

9. The electronic apparatus according to claim 7, **characterized in that** the sensing unit reads the status information stored in the storage portion, at predetermined intervals of time.

10. The electronic apparatus according to claim 7, **characterized in that** the fuel cell unit has updating portion which updates the status information stored in the storage portion so as to indicate that the remaining amount of fuel is a predetermined amount, when the tank has been removed or when the remaining amount of fuel in the tank has been reduced to zero.

11. A state display control method for an electronic apparatus capable of operating on electric power supplied from a fuel cell unit which has a fuel cell and in and from which a tank can be installed and removed, the method **characterized by** comprising the steps of:
acquiring (A10) the remaining amount of fuel in the tank installed in the fuel cell unit;
informing an operating system run on the electronic apparatus of the value obtained by subtracting a first predetermined value from the remaining amount acquired; and
displaying (A11) information to prompt the replacement of the tank, when the value obtained by subtracting the first predetermined value from the remaining amount is smaller than a second predetermined value.

12. A state display control method for an electronic apparatus capable of operating on electric power supplied from a fuel cell unit which has a fuel cell and in and from which a tank can be installed and removed, the method **characterized by** comprising the steps of:
sensing (A8) the removal of the tank from the fuel cell unit;
displaying (A9) information to prompt the installation of the tank, when the removal of the tank has been sensed; and
informing an operating system run on the electronic apparatus that the remaining amount of fuel is a predetermined amount, when the removal of the tank has been sensed.
